# EUROPÄISCHE PATENTANMELDUNG

(11) **EP 0 694 374 A2**
(43) Veröffentlichungstag der Anmeldung: **31.01.1996**
(21) Anmeldenummer: 95111831.4
(22) Anmeldetag: 28.07.1995
(51) Int. Cl.: B28C 1/18

(54) **Schaber für ein Feinwalzwerk für das Vermahlen von Rohstoffen für keramische Erzeugnisse**

(30) Priorität: 29.07.1994 DE 9412222 U; 22.09.1994 DE 9415338 U
(71) Anmelder: HÄNDLE GmbH & CO. KG, D-75417 Mühlacker (DE)
(72) Erfinder: Händle, Frank, D-75417 Mühlacker (DE)
(74) Vertreter: Twelmeier, Ulrich, Dipl. Phys.

(57) **Zusammenfassung**

Schaber für ein Feinwalzwerk für das Vermahlen von Ton und anderen Rohstoffen für die Herstellung von keramischen Erzeugnissen, mit einem Schaberblech (4), welches auf den Mantel einer Walze (1) des Feinwalzwerks einwirkt und zu diesem Zweck an einem Träger (5) angebracht ist, welcher als biegesteifer Torsionskasten ausgebildet ist.

## Beschreibung

Die Erfindung geht aus von einem Schaber für ein Feinwalzwerk für das Vermahlen von Ton und anderen Rohstoffen für die Herstellung von keramischen Erzeugnissen, mit einem Schaberblech, welches auf den Walzenmantel einer Walze des Feinwalzwerks einwirkt und zu diesem Zweck an einem Träger angebracht ist. Ein solcher Schaber ist z. B. in der DE-PS 4308342 offenbart. Der Schaber hat ein angespitztes Schaberblech, welches auf die Oberfläche des Walzenmantels einwirkt. Das Schaberblech ist austauschbar an einem Träger angebracht, bei dem es sich um ein Blech oder um eine Platte handelt.

Einem Feinwalzwerk wird der zu mahlende Rohstoff von oben zugeführt und im Walzspalt zwischen den beiden zueinander parallelen Walzen vermahlen, wobei er durch den Walzspalt hindurch fällt. Ein Teil des Mahlgutes wird verdichtet (bricketiert), bleibt an den Walzen haften und muß durch die Schaber vom Mantel der Walzen wieder abgeschabt werden. Je feiner das Mahlgut vermahlen werden soll, desto enger muß der Walzspalt sein. In den letzten Jahren hat es eine rasante Entwicklung hin zu Hochleistungswalzwerken gegeben, in denen engste Spalte, bis hinab zu 0,3 mm, gefahren werden können. Je enger der Walzspalt ist, desto stärker ist die Neigung zum Bricketieren des Mahlgutes, und umso schwieriger wird es, das verdichtete Mahlgut von den Walzenmänteln wieder abzuschaben. Durch den erforderlichen höheren Andruck des Schaberblechs an den Walzenmantel steigt leider auch der Verschleiß nicht nur an den Schaberblechen selbst, sondern auch an den Walzenmänteln, selbst wenn diese aus einem hochfesten, gehärteten Chromstahl bestehen. Hinzu kommt, daß das am Walzenmantel haftende Mahlgut versucht, den Schaber von der Walzenoberfläche abzuheben. Zeitweise kommt es deshalb zu einem Flattern des Schabers, und zwar umso häufiger, je schlechter die Qualität des Rohmaterials ist. In der Praxis hat man versucht, das Flattern dadurch zu beseitigen, daß man die Schaber mit größerer Kraft gegen die Walzen gepreßt hat. Das hat nicht nur den Nachteil, daß eine höhere Antriebsleistung für das Walzwerk benötigt wird, schlimmer war, daß die Schaber und die Walzen durch die kräftigere Reibung aufeinander sehr heiß wurden. Die Folgen waren erhöhter Verschleiß, nicht nur am Schaberblech, sondern auch an der Walze, selbst wenn diese aus hochfestem, hartem Chromstahl besteht; millimetertiefe Riefen und Rillen, 1-2 cm breit, konnten durch den Schaber in die gehärteten Oberflächen der Walzenmäntel gedrückt werden, zum Teil kam es auch zu tiefen Rissen. Ein Nacharbeiten der gehärteten Oberflächen, z. B. durch Abdrehen, ist jedoch sehr schwierig, zumal die Oberfläche durch die Einwirkung von harten Quarzkristallen, welche im Rohmaterial enthalten sind, noch zusätzlich härter wird.

Der am Walzenmantel auftretende Verschleiß kann deshalb dazu führen, daß schon nach wenigen Wochen Laufzeit eine Walze (Kosten größenordnungsmäßig DM 120 000,-) ausgetauscht werden muß.

Der vorliegenden Erfindung liegt die Aufgabe zugrunde, einen Weg aufzuzeigen, wie der Verschleiß an den Walzenmänteln reduziert werden kann.

Diese Aufgabe wird gelöst durch einen Schaber mit den in Anspruch 1 angegebenen Merkmalen. Vorteilhafte Weiterbildungen der Erfindung sind Gegenstand der abhängigen Ansprüche.

Die Erfindung verläßt den durch den Stand der Technik vorgezeichneten Weg, den Problemen beim Feinwalzwerk mit immer härteren Werkstoffen und größeren Kräften zu begegnen, sondern vollführt eine Kehrtwendung, setzt beim Schaberaufbau an und sorgt durch eine neuartige und intelligente Ausbildung des Trägers für das Schaberblech dafür, daß Flatterbewegungen des Schabers am Walzenmantel weitgehend unterbunden werden. Erreicht wird dies dadurch, daß als Träger für das Schaberblech ein biegesteifer Torsionskasten eingesetzt wird, insbesondere ein einstückiger monolithischer Torsionskasten in Gestalt einer Torsionsnase.

Durch den neuartigen Aufbau des Schabers werden viele Vorteile erreicht:
- Das Schaberblech, auch als Klinge bezeichnet, wird auf einfache Weise stabilisiert.
- Der Anpreßdruck des Schabers kann kräftig gesenkt werden, ungefähr auf etwa ein Drittel der heute üblichen Werte.
- Die Erwärmung des Walzenmantels und des Schabers wird drastisch reduziert (beim Stand der Technik konnten Schaber Temperaturen um 600°C (Kirschglut) erreichen.
- Das Rohmaterial bleibt kalt (früher erwärmte es sich durch den heißen Schaber um rund 30°C) und trocknet nicht aus.
- Antriebsleistung und Stromaufnahme der Walzenantriebsmotoren werden gesenkt.
- Die Schaberbleche, die beim Stand der Technik typisch eine Dicke von 8 mm hatten, können jetzt dünner ausgeführt werden, was nicht nur preiswerter ist und den Austausch erleichtert, sondern auch die Schabewirkung verbessert und die Reibung mindert.
- Nicht nur die Schaber, sondern auch die sehr teuren Walzen haben eine längere Standzeit.
- "Bärte", die beim Stand der Technik an Schaber entstehen und in Form von Spänen in das Mahlgut abfallen können und dort zu schädlichen Folgen führen (man sieht sie z. B. in der Glasur eines keramischen Produktes), treten erfindungsgemäß nicht auf.

Einen günstigen Einfluß auf einen ruhigen Lauf des Schabers an der Walze hat es ferner, wenn man den Schaber anders als im Stand der Technik nicht durch Pneumatikzylinder, sondern durch Hydraulikzylinder anstellt. Als Werkstoff für das Schaberblech bewähren sich besonders Werkzeugstähle mit höherem Kohlenstoffanteil, welche sich während der Schabetätigkeit aufkohlen und dadurch härten. Geeignet sind insbesondere Stähle, welche außer Eisen 7-16 Gewichtsprozent Chrom und 1-3 Gewichtsprozent Kohlenstoff, weitere Bestandteile in Spuren, enthalten, z. B. der Werkstoff Nr. 1.2080 (DIN X 210 Cr12). Solche Stähle sind in Maschinen für die Verarbeitung von Rohstoffen für die keramische Industrie untypisch, haben sich aber für erfindungsgemäße Schaber sehr bewährt. Sie können ungehärtet eingesetzt werden und werden beim Schaben härter.

Üblicherweise ist ein Schaber schwenkbar gelagert. Für einen ruhigen, schwingungsarmen Betrieb des Schabers ist es deshalb auch günstig, eine möglichst spielfreie Lagerung zu haben, z. B. in präzisen Nadellagern, vorzugsweise an seitlich der Walzen angeordneten Schwingen.

Für die Steifigkeit des Kastenprofils des Schaberträgers ist es ferner von Vorteil, wenn dieses mit Rippen versehen ist. Die Rippen ermöglichen es, den Torsionskasten mit geringen Wandstärken auszuführen, was für den Einsatz des Schabers nicht unwesentlich ist.

Ein Ausführungsbeispiel der Erfindung ist schematisch in der beigefügten Schnittzeichnung dargestellt, welche einen erfindungsgemässen Schaber zeigt, der auf den unteren Bereich des Mantels einer Walze 1 eines Feinwalzwerkes einwirkt. Der Schaber ist in beidseits der Walze 1 vorgesehenen Schwingen 2 um ein horizontales Drehlager 3 verschwenkbar gelagert. Zwischen den Schwingen erstreckt sich als Träger für ein Schaberblech 4 ein Torsionskasten 5 in Gestalt einer Torsionsnase, ein sehr biegesteifer Träger, dessen dreieckige Gestalt der Gestalt eines Tragflügels nachempfunden ist. An diesem steifen Träger 5 ist eine Befestigungsplatte 6 angeschraubt, mit welcher das Schaberblech 4 verschraubt ist. Die Ausbildung des Trägers und seine Anordnung an der Walze 1 sind so getroffen, daß abgeschabtes Material, welches dünn ist, wegen der erhöhten Walzentemperatur rasch austrocknet und zum Festbacken neigt, sich nicht auf dem Schaber ablagern kann.

Das Schaberblech 4 besteht mit Vorteil aus dem Stahl 1.2080 und ist vorzugsweise 2mm dick. Mit einem solchem Schaber wurden Standzeiten von 1 Monat und mehr erreicht, rund 4 mal solange wie mit einem Schaber aus dem Stand der Technik. Die gefürchteten Schaberbärte, die sich als Späne in der Glasur wiederfinden und ein Zeichen für hohen Verschleiß sind, treten erfindungsgemäß nicht auf. Insbesondere die bevorzugten kohlenstoffreichen Stähle bilden keine langen Späne, sondern einen unkritischen, staubförmigen Abrieb.

Das Schaberblech 4 wird vorzugsweise mit etwas Vorspannung in seinen Halter eingesetzt, wodurch die Neigung zu Vibrationen noch nochmals herabgesetzt wird.

Besonders geignet ist die Verwendung eines erfindungsgemäßen Schabers in Kombination mit Walzen, deren Walzenmantel an seinen beiden Enden von Ringen aus Weicheisen begrenzt sind und dadurch vor allem Abplatzungen an den Rändern des Walzenmantels unterbinden. Solche Walzen sind Gegenstand der am selben Tage eingereichten Gebrauchsmusteranmeldung mit dem Titel "Walze für ein Feinwalzwerk für das Vermahlen von Rohstoffen für keramische Erzeugnisse".

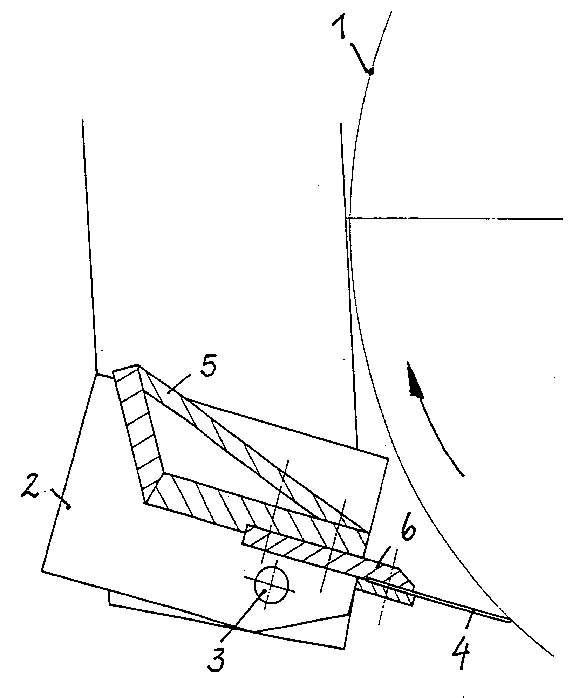

## Patentansprüche

1. Schaber für ein Feinwalzwerk für das Vermahlen von Ton und anderen Rohstoffen für die Herstellung von keramischen Erzeugnissen, mit einem Schaberblech (4), welches auf den Mantel einer Walze des Feinwalzwerks einwirkt und zu diesem Zweck an einem Träger (5) angebracht ist,
**dadurch gekennzeichnet**, daß der Träger (5) als Torsionskasten ausgebildet ist.

2. Schaber nach Anspruch 1, **dadurch gekennzeichnet**, daß der Torsionskasten (5) die Gestalt einer Torsionsnase hat.

3. Schaber nach Anspruch 1 oder 2, **dadurch gekennzeichnet**, daß das Schaberblech (4) aus einem kohlenstoffreichen Stahl mit 7 - 16 Gew.% Chrom, 1 - 3 Gew.% Kohlenstoff, weitere Bestandteile allenfalls in Spuren, Rest Eisen besteht.

4. Schaber nach einem der vorstehenden Ansprüche, **dadurch gekennzeichnet**, daß der Träger zur Verringerung seiner Wandstärke gerippt ist.

5. Schaber nach einem der vorstehenden Ansprüche, **dadurch gekennzeichent**, daß das Schaberblech zwischen 1,5 und 3mm, insbesondere 2mm dick ist.

6. Schaber nach einem der vorstehenden Ansprüche, **dadurch gekennzeichent**, daß er durch eine oder mehrere hydraulische Kolben-Zylinder-Einheiten gegen die Walze gedrückt wird.

7. Schaber nach einem der vorstehenden Ansprüche, **dadurch gekennzeichnet**, daß das Schaberblech (4) in seiner Halterung vorgespannt ist.

8. Schaber nach Anspruch 1, **dadurch gekennzeichnet**, daß zur Vermeidung von Rohmaterialaufbau seine Oberseite ausschließlich durch abfallende Flächen gebildet ist.

9. Schaber nach einem der vorstehenden Ansprüche, dadurch gekennzeichnet, daß der Torsionskasten (5) einstückig ausgebildet und das Schaberblech (4) lösbar an der Außenseite des Torsionskastens (5) angebracht ist.
